Europäisches Patentamt

European Patent Office

Office européen des brevets

(11) Veröffentlichungsnummer: **0 239 869**
**A1**

(12) # EUROPÄISCHE PATENTANMELDUNG

(21) Anmeldenummer: **87103905.3**

(22) Anmeldetag: **17.03.87**

(51) Int. Cl.4: **G05G 5/06**

(30) Priorität: **03.04.86 DE 8608939 U**

(43) Veröffentlichungstag der Anmeldung:
**07.10.87 Patentblatt 87/41**

(84) Benannte Vertragsstaaten:
**DE FR IT**

(71) Anmelder: **INA Wälzlager Schaeffler KG**
**Industriestrasse 1-3 Postfach 1220**
**D-8522 Herzogenaurach(DE)**

(72) Erfinder: **Steinberger, Wolfgang, Dipl.-Ing.**
**von-Hauck-Strasse 30**
**D-8522 Herzogenaurach(DE)**
Erfinder: **Zettner, Herbert**
**Turnerweg 11**
**D-8522 Herzogenaurach(DE)**
Erfinder: **Christmayr, Robert, Dipl.-Ing.**
**Ringstrasse 108**
**D-8608 Memmelsdorf(DE)**
Erfinder: **Gulden, Heidi**
**Schlaffhäusergasse 14**
**D-8522 Herzogenaurach(DE)**

(74) Vertreter: **Klug, Horst, Dipl.-Ing. (FH)**
**c/o INA Wälzlager Schaeffler KG Postfach 12 20**
**D-8522 Herzogenaurach(DE)**

(54) **Bolzen zum Arretieren einer in einer Führungsbohrung längsverschieblichen Stange.**

(57) Bei einem Bolzen zum Arretieren einer in einer Führungsbohrung längsverschieblichen Stange, der aus einem Schaftteil und einem an dessen einem Ende angebrachten Eingriffsteil besteht, wobei der Bolzen seinerseits in einer in die Führungsbohrung mündenden Bohrung längsverschieblich angeordnet ist und unter der Wirkung einer an seinem Schaftteil angreifenden Feder mit seinem Eingriffsteil in eine Aussparung der Stange eingreift, wird eine kostengünstige Herstellung aus wenigen Einzelteilen unter gleichzeitiger Verringerung der Reibungskräfte im Zusammenwirken mit der Stange dadurch erreicht, daß das Schaftteil (5) im wesentlichen zylindrisch ausgebildet ist, aus einem gieß-oder spritzbaren polymeren Werkstoff besteht und das Eingriffsteil durch eine metallische Kugel (6) gebildet ist, die in einer entsprechenden Ausnehmung (11) an dem einen Ende des Schaftteils (5) formschlüssig gehalten ist.

FIG. 1

## Bolzen zum Arretieren einer in einer Führungsbohrung längsverschieblichen Stange

Die Neuerung betrifft einen Bolzen zum Arretieren einer in einer Führungsbohrung längsverschieblichen Stange, der aus einem Schaftteil und einem an dessen einem Ende angebrachten Eingriffsteil besteht, wobei der Bolzen seinerseits in einer in die Führungsbohrung mündenden Bohrung längsverschieblich angeordnet ist und unter der Wirkung einer an ihm angreifenden Feder mit seinem Eingriffsteil in eine Aussparung der Stange eingreift.

Derartige Bolzen, die z. B. zur Arretierung von Schaltstangen in Gangwechselgetrieben von Kraftfahrzeugen dienen, sind bereits bekannt. Im Falle einer bekannten Ausführung besteht das Schaftteil aus einem an seinem einen Ende gegabelten Metallteil, wobei das Eingriffsteil durch eine Rolle gebildet ist, die mittels eines Stiftes zwischen den Armen des gegabelten Endes des Schaftteils drehbar gelagert ist. An seinem anderen Ende wird das Schaftteil durch eine Druckfeder beaufschlagt, unter deren Wirkung die Rolle in eine entsprechende Ausnehmung der Stange eingreift. Dieser an sich zufriedenstellend funktionierende Bolzen hat, unter anderem infolge seiner relativ vielen Einzelteile, den Nachteil hoher Fertigungskosten.

Es ist auch bereits ein Bolzen bekannt, der aus einem metallischen Schaftteil besteht und dessen Eingriffsteil durch eine an seinem einen Ende angebrachte ballige Fläche gebildet ist. Da der Bolzen somit einstückig ausgebildet ist, kann er sehr kostengünstig hergestellt werden, jedoch weist er funktionelle Nachteile auf, da zwischen der Stange und dem Eingriffsteil infolge der dort auftretenden Gleitreibung erhebliche Reibungskräfte wirksam werden.

Der Neuerung liegt die Aufgabe zugrunde, einen Bolzen der eingangs genannten Art anzugeben, der aus wenigen Einzelteilen besteht, kostengünstig herstellbar ist und im Zusammenwirken mit der Stange nur geringe Reibungskräfte verursacht.

Gemäß der Neuerung wird diese Aufgabe dadurch gelöst, daß das Schaftteil im wesentlichen zylindrisch ausgebildet ist, aus einem gieß-oder spritzbaren polymeren Werkstoff besteht und das Eingriffsteil durch eine metallische Kugel gebildet ist, die in einer entsprechenden Ausnehmung an dem einen Ende des Schafteils formschlüssig gehaltert ist.

Der Bolzen besteht somit aus nur zwei äußerst kostengünstig herstellbaren Bauteilen. Da zwischen der Kugel und der Stange rollende Reibung vorliegt und zwischen der Kugel und der Ausnehmung des Schafteils aufgrund der Werkstoffpaarung Metall/Kunststoff eine nur geringe gleitende Reibung, die durch die Anwesenheit eines Schmiermittels nochmals weiter gesenkt werden kann, setzt der Bolzen einer Verschiebung der Stange nur einen geringen Reibungswiderstand entgegen.

Eine Ausführungsform der Neuerung sieht vor, daß die Kugel in die Ausnehmung eingeschnappt ist, wodurch der Bolzen eine leicht handhabbare selbsthaltende Baugruppe bildet. Um das Einschnappen der Kugel zu erleichtern, sieht eine Variante der Neuerung vor, daß die Ausnehmung durch eine halbkugelige Vertiefung gebildet ist, deren Radius dem der Kugel entspricht und die an zwei einander diametral gegenüberliegenden Stellen von mit dem Schaftteil einstückigen federnden Lappen überragt ist, welche die Kugel hintergreifen. Dabei ist es von Vorteil, die Kontaktfläche zwischen den Lappen und der Kugel entsprechend deren Radius hohlkugelig auszubilden. Um das Einschnappen der Kugel weiter zu erleichtern, sieht eine Ausführung der Neuerung vor, daß die Kontaktflächen in schräg zum Außendurchmesser des Schaftteils hin verlaufende Flächen übergehen.

Um dann, wenn der Bolzen in Richtung auf die Stange in die ihn aufnehmende Bohrung eingeführt wird, bei der Montage sicherstellen zu können, daß sich die Lappen in wesentlichen parallel zur Längsachse der Stange erstrecken, weist die von der Kugel abgewandte Stirnfläche des Schaftteils eine radial verlaufende Nut auf, die sich im wesentlichen parallel zu den Lappen erstreckt. Es ist so möglich, die Lage des Bolzens zur Stange zu kontrollieren und mit einem in die Nut eingreifenden Werkzeug, falls nötig, zu korrigieren.

Nach einer Variante der Neuerung weist die äußere Mantelfläche des Schaftteils wenigstens eine sich über deren gesamte Länge erstreckende Nut auf, die in Fällen, in denen die den Bolzen aufnehmende Bohrung an ihrem von der Stange entfernten Ende durch einen Stopfen oder dergleichen verschlossen ist, den Durchtritt von Luft aus dem hinter dem Bolzen befindlichen Raum in Richtung auf die Stange gestattet. Es wird so vermieden, daß beim Verschieben der Stange dem Ausrasten des Bolzens aus der Aussparung ein unzulässig hoher Widerstand entgegenwirkt.

Um Bauraum in axialer Richtung des Bolzens einsparen zu können, sieht eine Ausführungsform der Neuerung vor, daß das von der Kugel abgewandte Ende des Schaftteils eine Sackbohrung aufweist, in der die als Schraubendruckfeder ausgebildete Feder aufgenommen und geführt ist. Die von dem Bolzen samt Feder beanspruchte Baulänge entspricht dann im wesentlichen der Länge des Bolzens zuzüglich des benötigten Federweges. In Fällen, in denen die Feder erheblich kürzer als der Bolzen ist, sieht eine Variante der Neuerung vor, daß von dem Boden der Sackbohrung ausgehende Rippen an deren Bohrungswandung vorgesehen sind, die sich über einen Teil der Länge der Sackbohrung erstrecken und deren Stirnflächen die Auflage für die Schraubendruckfeder bilden. Durch diese Maßnahme werden im Hinblick auf die Herstellung des Schaftteils im Gieß-oder Spritzverfahren schädliche Materialanhäufungen vermieden.

Nach einer Ausführung der Neuerung ist vorgesehen, daß das Schaftteil an wenigstens einem seiner Enden eine Verjüngung aufweist. Es wird so dem Abtrag von Schmiermittel von der Wandung der den Bolzen aufnehmenden Bohrung entgegengewirkt. Außerdem kann nach einer Variante der Neuerung vorgesehen sein, daß sich ausgehend von dem der Kugel abgewandten Ende des Schaftteils eine Durchgangsbohrung zu der Ausnehmung erstreckt, welche Schmiernuten aufweist, die mit der Durchgangsbohrung in Verbindung stehen, wodurch hinter dem Bolzen vorhandenes Schmiermittel zu der Ausnehmung gelangen und dort die Reibung zwischen der Kugel und der Ausnehmung verrigern kann.

Schließlich ist nach einer letzten Ausführung der Neuerung vorgesehen, daß die Ausnehmung Vertiefungen zur Aufnahme von Schmiermittel aufweist. Auch diese Maßnahme dient der Verminderung der Reibung zwischen der Kugel und der Ausnehmung.

Ein Ausführungsbeispiel der Neuerung ist in den beigefügten Zeichnungen dargestellt. Es zeigen:

Fig. 1 einen Längsschnitt durch eine gemäß der Neuerung ausgebildeten, in ein Gehäuse eingebauten Bolzen,

Fig. 2 einen Querschnitt durch den Bolzen entsprechend der Linie II-II in Fig. 3,

Fig. 3 einen Längsschnitt durch den Bolzen entsprechend der Linie III-III in Fig. 2 und

Fig. 4 einen Querschnitt durch den Bolzen ohne Kugel entsprechend der Linie IV-IV in Fig. 3.

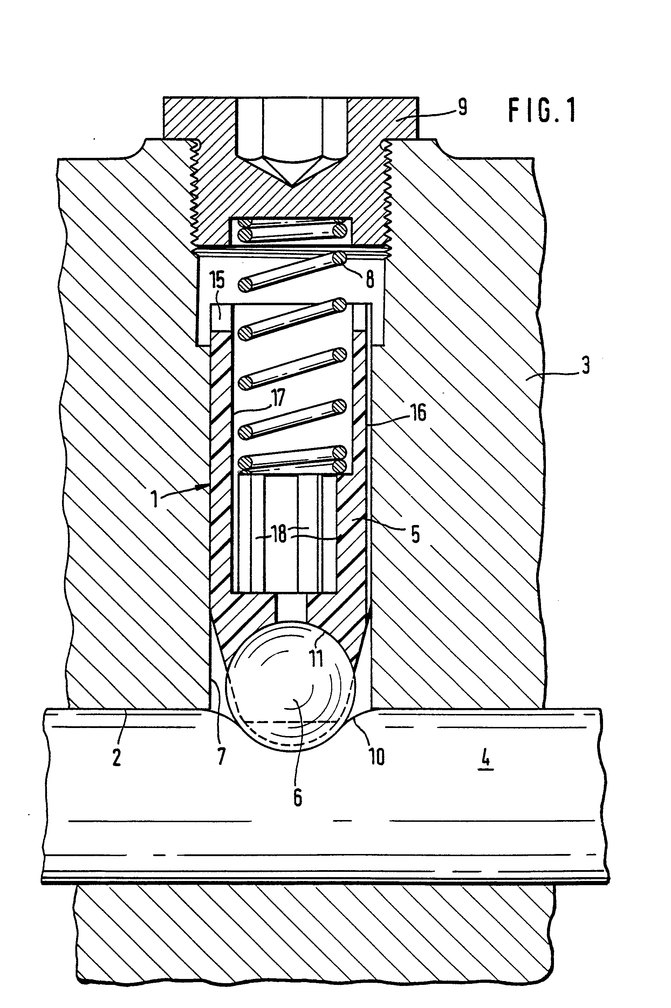

In Figur 1 ist ein Bolzen 1 zum Arretieren einer in einer Führungsbohrung 2 eines Gehäuses 3 längsverschieblichen Stange 4 dargestellt, der aus einem Schaftteil 5 und einem an dessen einem Ende angebrachten Eingriffsteil 6 besteht, wobei der Bolzen 1 seinerseits in einer in die Führungsbohrung 2 mündenden Bohrung 7 längsverschieblich angeordnet ist und unter der Wirkung einer an dem Schaftteil 5 angreifenden Feder 8, die sich an einer die Bohrung 7 verschließenden Verschlußschraube 9 abstützt, mit seinem Eingriffsteil 6 in eine Aussparung 10 der Stange 4 eingreift.

Wird die Stange 4 axial in der Führungsbohrung 2 ausgehend von der dargestellten arretierten Position verschoben, wird der Bolzen 1 gegen die Wirkung der Feder 8 in die Bohrung 7 geschoben, wobei das Eingriffsteil 6 mit der Aussparung 10 außer Eingriff kommt.

Wie aus den Figuren 1 bis 3 ersichtlich ist, ist das Schaftteil 5 im wesentlichen zylindrisch ausgebildet und besteht aus einem gieß-oder spritzbaren polymeren Werkstoff. An seinem von der Feder 8 entfernten Ende weist das Schaftteil 5 eine Ausnehmung 11 auf, in der das als metallische Kugel ausgebildete Eingriffsteil 6 formschlüssig gehalten ist.

Die Ausnehmung 11 ist durch eine halbkugelige Vertiefung gebildet, deren Radius dem der Kugel 6 entspricht und die von zwei einander diametral gegenüberliegenden Lappen 12 überragt ist, welche die Kugel 6 hintergreifen. Dabei sind die Kontaktflächen 13 zwischen den Lappen 12 und der Kugel 6 entsprechend deren Radius hohlkugelig ausgeführt, wobei die Kontaktflächen 13 in - schräg zum Außendurchmesser des Schaftteils 5 hin verlaufende Flächen 14 übergehen.

An seiner von der Kugel 6 abgewandten Stirnfläche weist das Schaftteil 5 eine radial verlaufende Nut 15 auf. Außerdem ist die äußere Mantelfläche des Schaftteils 5 mit sich über deren gesamte Länge erstreckende Nuten 16 versehen.

Das von der Kugel 6 abgewandte Ende des Schaftteils 5 weist eine Sackbohrung 17 auf, in der die als Schraubendruckfeder ausgebildete Feder 8 aufgenommen und geführt ist, die auf den Stirnflächen von Rippen 18 aufliegt, die von dem Boden der Sackbohrung 17 ausgehend an deren Bohrungswandug vorgesehen sind.

An seinem der Kugel 6 benachbarten Ende weist das Schaftteil 5 eine Verjüngung 19 auf, durch die der Abtrag von Schmiermittel von der Wandung der Bohrung 7 vermieden wird. Wenn das Schaftteil 5 anders als in Figur 1 dargestellt mit seiner gesamten Länge in der Bohrung 7 geführt ist, ist es zweckmäßig aus dem genannten Grund auch an seinem anderen Ende eine Verjüngung vorzusehen.

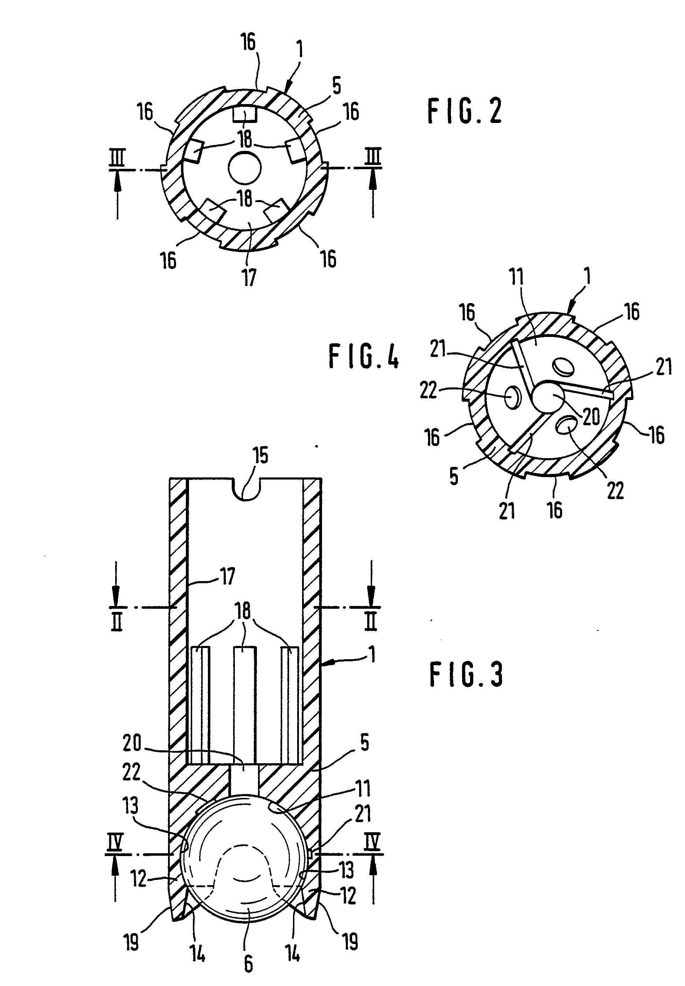

Wie schließlich aus Figur 4 in Verbindung mit Figur 3 ersichtlich ist, erstreckt sich ausgehend von dem Boden der Sackbohrung 17 eine Durchgangsbohrung 20 zu der Ausnehmung 11. Letztere weist Schmiernuten 21 auf, die mit der Durchgangsbohrung 20 in Verbindung stehen. Außerdem weist die Ausnehmung 11 Vertiefungen 22 zur Aufnahme von Schmiermittel auf.

Die beschriebene Ausbildung des Bolzens 1 ist insbesondere im Hinblick auf die Gestaltung des Schaftteils 5 nur beispielhaft zu verstehen und kann dem jeweiligen Anwendungsfall entsprechend im Rahmen der Neuerung andersartig sein.

**Ansprüche**

1. Bolzen zum Arretieren einer in einer Führungsbohrung längsverschieblichen Stange, der aus einem Schaftteil und einem an dessen einem Ende angebrachten Eingriffsteil besteht, wobei der Bolzen seinerseits in einer in die Führungsbohrung mündenden Bohrung längsverschieblich angeordnet ist und unter der Wirkung einer an seinem Schaftteil angreifenden Feder mit seinem Eingriffsteil in eine Aussparung der Stange eingreift, **dadurch gekennzeichnet,** daß das Schaftteil (5) im wesentlichen zylindrisch ausgebildet ist, aus einem gieß-oder spritzbaren polymeren Werkstoff besteht und das Eingriffsteil durch eine metallische Kugel (6) gebildet ist, die in einer entsprechenden Ausnehmung (11) an dem einen Ende des Schaftteils (5) formschlüssig gehaltert ist.

2. Bolzen nach Anspruch 1, **dadurch gekennzeichnet,** daß die Kugel (6) in die Ausnehmung (11) eingeschnappt ist.

3. Bolzen nach Anspruch 2, **dadurch gekennzeichnet,** daß die Ausnehmung (11) durch eine halbkugelige Vertiefung gebildet ist, deren Radius dem der Kugel (6) entspricht und die an zwei einander diametral gegenüberliegenden Stellen von mit dem Schaftteil (5) einstückigen federnden Lappen (12) überragt ist, welche die Kugel (6) hintergreifen.

4. Bolzen nach Anspruch 3, **dadurch gekennzeichnet,** daß die Kontaktflächen (13) zwischen den Lappen (12) und der Kugel (6) entsprechend deren Radius hohlkugelig ausgebildet sind.

5. Bolzen nach Anspruch 4, **dadurch gekennzeichnet,** daß die Kontaktflächen (13) in schräg zum Außendurchmesser des Schaftteils (5) hin verlaufende Flächen (14) übergehen.

6. Bolzen nach einem der Ansprüche 3 bis 5, **dadurch gekennzeichnet,** daß die von der Kugel (6) abgewandte Stirnfläche des Schaftteils (5) eine radial verlaufende Nut (15) aufweist, die sich im wesentlichen parallel zu den Lappen (12) erstreckt.

7. Bolzen nach einem der Ansprüche 1 bis 6, **dadurch gekennzeichnet,** daß die äußere Mantelfläche des Schaftteils (5) wenigstens eine sich über deren gesamte Länge erstreckende Nut (16) aufweist.

8. Bolzen nach einem der Ansprüche 1 bis 7, **dadurch gekennzeichnet,** daß das von der Kugel (6) abgewandten Ende des Schaftteils (5) eine Sackbohrung (17) aufweist, in der die als Schraubendruckfeder (8) ausgebildete Feder aufgenommen und geführt ist.

9. Bolzen nach Anspruch 8, **dadurch gekennzeichnet,** daß von dem Boden der Sackbohrung (17) ausgehende Rippen (18) an deren Bohrungswandung vorgesehen sind, die sich über einen Teil der Länge der Sackbohrung (17) erstrecken und deren Stirnflächen die Auflage für die Schraubendruckfeder (8) bilden.

10. Bolzen nach einem der Ansprüche 1 bis 9, **dadurch gekennzeichnet,** daß das Schaftteil (5) an wenigstens einem seiner Enden eine Verjüngung (19) aufweist.

11. Bolzen nach einem der Ansprüche 1 bis 10, **dadurch gekennzeichnet,** daß sich ausgehend von dem der Kugel (6) abgewandten Ende des Schaftteils (5) eine Durchgangsbohrung (20) zu der Ausnehmung (11) erstreckt, welche Schmiernuten (21) aufweist, die mit der Durchgangsbohrung (20) in Verbindung stehen.

12. Bolzen nach einem der Ansprüche 1 bis 11, **dadurch gekennzeichnet,** daß die Ausnehmung (11) Vertiefungen (22) zur Aufnahme von Schmiermittel aufweist.

FIG.1

0 239 869

FIG.2

FIG.4

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-1 815 534 (ITW) <br> * Seite 3, Absätze 1-3; Seite 10, Ansprüche 1,2,5; Figuren 1-3 * | 1 | G 05 G 5/06 |
| A | | 3 | |
| | --- | | |
| X | WO-A-8 600 967 (ZAHNRADFABRIK FRIEDRICHSHAFEN AG) <br> * Figuren 4-7 (Ref. 41,42) * | 1,2,8, 10 | |
| | --- | | |
| A | GB-A-2 079 387 (ELRING DICHTUNGSWERKE GMBH) <br> * Das ganze Dokument * | 1 | |
| | --- | | |
| A | FR-A- 612 492 (P. VOLLAND) <br> * Figur; Zeilen 36-37 * | 2,11 | |
| | ----- | | |

|  |
|---|
| RECHERCHIERTE SACHGEBIETE (Int. Cl.4) |
| G 05 G <br> F 16 H <br> F 16 B <br> E 05 C <br> B 60 K |

Der vorliegende Recherchenbericht wurde für alle Patentansprüche erstellt.

| Recherchenort | Abschlußdatum der Recherche | Prüfer |
|---|---|---|
| DEN HAAG | 10-07-1987 | MENDE H. |